# EUROPEAN PATENT APPLICATION

(11) **EP 4 332 696 A1**
(43) Date of publication of application: **06.03.2024**
(21) Application number: 23194020.6
(22) Date of filing: 29.08.2023
(51) Int. Cl.: G05B 15/02, G05B 23/02

(54) **METHOD FOR MANAGING AND TRACING OF ACCESSORIES AND/OR PRODUCTS IN COMBINATION WITH TROLLEYS FOR MAINTENANCE AND/OR CLEANING AND/OR SANITIZATION AND/OR DISINFECTION TASKS AND METHOD OF MANAGEMENT OF SAID ACCESSORIES AND/OR PRODUCTS BY MEANS OF TAGS OR CAMERAS**

(30) Priority: 30.08.2022 IT 202200017772
(71) Applicant: Santinon, Renato, 10137 Torino (IT)
(72) Inventor: Santinon, Renato, 10137 Torino (IT)
(74) Representative: Karaghiosoff, Giorgio Alessandro

(57) **Abstract**

Auxiliary trolley for the transport of material and/or equipment to be used in various operations, such as maintenance operations, and in particular cleaning and/or sanitization and/or disinfection or other similar activities, which trolley comprises a housing and/or storage structure of accessories, in particular consumables, for carrying out activities, tools for carrying out activities or other accessories or the like, which housing and/or storage structure may comprise one or more compartments and/or one or more trays for housing/storing said accessories and in which said trolley comprises a control unit with at least one reading unit of a unique identification code, which consists alternatively or in combination in an optically readable form, the reading unit being a video camera or the like in combination with an image processing unit or said identification code being stored in an electronic tag associated or physically associable to respectively each of at least one or at least some accessories and/or tools, included among the accessories and/or among the tools loaded on said trolley, said reading unit being a communication unit with a corresponding communication unit of said electronic tag for picking up or receiving said digital identification code memorized therein.

## Description

The invention relates to a method for managing and tracing of accessories and/or products in combination with trolleys for maintenance and/or cleaning and/or sanitization and/or disinfection tasks and method of management of said accessories and/or products by means of tags or cameras.

### STATE OF THE ART

Currently, auxiliary trolleys for the transport of material and/or equipment to be used in various operations, such as maintenance operations, and in particular cleaning and/or sanitization and/or disinfection or other similar activities, comprise a trolley base which carries a housing and/or storage structure for accessories, in particular consumables for carrying out activities, tools for carrying out activities or other accessories or the like, which housing and/or storage structure may comprise one or more compartments and/or one or more trays for housing/storing said accessories.

The association between pre-established accessories of one or more of the above types and a trolley and/or the association of one or more users with said trolley is not managed in most cases, or if such management is considered it makes use of manual systems, which are imprecise and are left to the good will and precision of the staff.

A further problem concerns the possibility of verifying whether the personnel assigned to carry out the activities has actually carried out the activities to which they have been assigned in the correct manner and this in relation to the correct application of the instructions for carrying out said activities.

Furthermore, in relation to said accessories, these are subject to wear and/or consumption. If during the performance of the activity, one or more of the accessories are no longer available on the trolley and/or have reached excessive consumption conditions that make them no longer functional, the responsible personnel has the choice to continue in carrying out their activities by seeking temporary solutions that make it possible to at least partially overcome the lack of an accessory, for example by using other types of accessories which, in his/her opinion, can be used, even if improperly, to replace those that are out of stock or no longer functional, or to skip the operation for which the accessories foreseen according to the work instructions are no longer available, or as a third option, interrupting the activities to recover the accessory and/or accessories that are exhausted or no longer functional. In carrying out this last option it is also possible that the trolley with its contents will be left temporarily unattended with the risk of theft of the accessories and/or the products loaded on it.

The aforementioned situation is not improbable, since the control of the load of the trolleys is entrusted either to the personnel themselves who use them as a work tool, or to a controller who in any case may not correctly detect the condition of wear and/or consumption of the accessories and/or products in the cart at the start of the activity.

### BRIEF DESCRIPTION OF THE INVENTION

A first object of the present invention is to allow the control of the presence on the trolley of all the accessories necessary for carrying out the activities for which the trolley is arranged as an aid for the personnel assigned to carry out said activities.

A further object consists in allowing to detect the correctness of the operations performed by the personnel in charge and this in relation to the type of accessories chosen for the use of an activity and/or at least one parameter for assessing the probability that the activity carried out has been performed according to the instructions.

A further object consists in making it possible to verify that the activity is carried out in the correct intervention site and if several sites are envisaged to perform an aforesaid activity in each of these sites, to verify that the intervention has been carried out in all the envisaged sites and also according to an order of priority foreseen in the work order.

Yet another object consists in being able to detect the state of wear of one or more of the accessories present on the trolley and functional to the performance of the envisaged activities and therefore to provide a correct planning of the activities of replenishment of said accessories and/or maintenance or restoration of the functional conditions of the same.

To achieve one or more of the aforementioned objects, the invention relates to an auxiliary trolley for transporting material and/or equipment to be used in various operations, such as maintenance operations, and in particular cleaning and/or sanitizing and/or disinfection or other similar activities, which cart includes:
a trolley base carrying a structure for housing and/or storing accessories, in particular consumables for carrying out activities, tools for carrying out activities or other accessories or the like,
which housing and/or storage structure can comprise one or more compartments and/or one or more trays for housing/storing said accessories and in which
said trolley comprising a control unit with at least one unit for reading a unique identification code, which identification code is made alternatively or in combination
in an optically readable form, such as an alphanumeric code and/or a graphic code and/or a color or a combination of colors and/or a shape or a combination of shapes, the reading unit being a video camera or the like in combination with an image processing unit configured to recognize in the images acquired by said video camera said alphanumeric code and/or said graphic code and/or said color or said combination of colors and/or said shape or said combination of shapes, or
the said identification code being encoded in digital form in an electronic type label, such as a so-called electronic tag,
being said electronic tag with an identification code stored therein physically associated or associable respectively with each of at least one or at least some accessories and/or tools, included among the accessories and/or among the tools loaded on said trolley, said reading unit being a communication unit able to communicate with a corresponding communication unit of said electronic tag for picking up or receiving said digital identification code memorized therein.

If the unambiguous recognition of the accessory and/or tool taken or repositioned in the trolley is performed thanks to a code physically associated with the object and readable by means of a video camera or the like, the image processing unit provided in combination with the video camera processes said image for the recognition and possible decoding of the code.

The different variants of optical or optically detectable and visible codes may comprise, alternatively or in combination with each other, graphic codes, such as barcodes or QR codes, similar codes which are physically applied to an object in a visible position or which are made using techniques of impression on the external surface of said objects and/or of overmoulding.

Alternatively, or in combination, the codes can be codes of an alphanumeric type such as combinations of letters and/or numbers or symbols and which are also applied to an object in a visible position or are made by means of impression techniques on the external surface of said objects and/or of overmoulding.

Further variants of said optical type codes can consist of a specific color or a specific combination of colors or the external shape of the object.

Also these variants can be provided alternatively to each other and also alternatively to the previous executive variants or in any combination between them and with one or both of the aforementioned executive variants.

The image processing unit for the code recognition and decoding comprises a generic processing unit in which a code recognition and/or decoding program is loaded and from which it is executed.

In the embodiment in which the code is stored in said electronic tag, the said electronic tag can preferably comprise a communication unit of the wireless type which communicates with the communication unit of the control unit present on the trolley, and at least one memory in which said at least one unique identification code of the accessory and/or tool is memorized, the said code being uniquely correlated or may be correlated to the type of accessory and/or tool to which said electronic tag is physically coupled.

The coupling can be of the stable type, whereby said tag cannot be detached from the corresponding tool and/or accessory, or the tag can be coupled in a detachable way to the corresponding accessory and/or to the corresponding tool.

In this case, it is possible to provide that the trolley control unit is provided with a memory with a database in which a certain number of identification codes which are different from each other and at least a list of accessories and/or tools which are loaded or loadable on the trolley, are registered and/or can be registered, so that, every time an accessory or tool from said list is loaded on the trolley, a data record is generated which includes the unique code associated or intended to be associated with said tool and/or accessory, and the type of accessory or tool to which said code is coupled, which record is memorized in said database, while said record is archived and replaced with new data relating to a new code and a new type of accessory and/or tool each time a new accessory and/or a new tool is loaded to replace a previous accessory and/or a previous tool.

Although this procedure may be considered complex, it prevents the associations between univocal identification codes and the related accessories and/or tools registered as associated with said codes from being read illegally, so as to be able to perform incorrect or unauthorized operations.

Obviously in its less complete form but nevertheless equally effective form from a functional point of view with reference to the purposes highlighted above, the electronic tag with the corresponding unique identification code can be permanently associated with an accessory and/or a tool and/or optionally the unique identification code is also stored in a non-modifiable form in the memory of the electronic tag, for example in a "read only" type memory.

An intermediate embodiment provides that an electronic tag is physically associated in a stable way with an accessory and/or a tool, while the unique identification code stored in the memory of said electronic tag can be replaced by canceling the older identification code and rewriting a new unique identification code. Obviously, in this case, the correlation database between the type of accessory and/or tool and the unique code stored in the corresponding electronic tag will have to be updated with the new unique identification codes for the various accessories and/or tools.

This embodiment is advantageous when for example an accessory or a tool comprises consumable units which can be replaced or replenished, such as for example a specific container for a predetermined consumable product. In this case the container can always be the same and the identification code can be fixed.

In the event that the identification code is associated with the container of a consumable product, it is possible and advantageous to provide, in combination with the aforementioned trolley, also a station for filling said container with the corresponding consumable product, which station comprises:
a dispensing unit, a container identification code reading unit and a control unit thanks to which the container code is acquired,
while the filling station has a unit for measuring the quantity dispensed to the container and the control unit executes a control program which includes instructions for generating a record in which the code of the container is recorded and the corresponding filling quantity dispensed at the itself and optionally the type of product dispensed, and/or the date and time of dispensing and optionally also an identification code of the user who performed the filling, said record being recorded in a database memorized in a memory of said control unit.

There are many possible variants which can be implemented thanks to the various embodiments described above and the embodiments described above relate to some non-exhaustive and non-limiting examples.

In the case of the embodiment in which an electronic tag is associated with an accessory and/or a tool, the control unit can be provided with at least one unit for determining the distance between the electronic tag associated with said accessory and/or the said tool and said control unit and therefore the trolley.

There are different techniques for determining the distance which also depend on the type of communication protocols used.

In a known embodiment the determination of the distance can be performed, for example, by simple triangulation of the transmission signal received by the control unit and transmitted by the electronic tag by means of, for example, at least two antennas positioned on the trolley at a certain distance between the two ones.

Other communication technologies allow to determine the distance even with only one antenna.

In one embodiment the control unit comprises a processing unit which is configured by means of a program containing instructions for storing a maximum reference distance value, which value is settable by the user via a setting interface and to compare said reference value with the distance measured for each accessory and/or tool which have been moved away from the trolley and then removed.

In one embodiment, said program further comprises instructions for the processing unit of the control unit with which said control unit is rendered able to activate and deactivate a clock for each identification code to measure the time of absence of an accessory and/or a tool from the trolley.

In relation to the embodiment which provides for an identification code of the optical type, the activation of said clock can take place according to the instant in which the processing of the video camera image corresponds to an act of picking up and/or removing said accessory and/or of said trolley, while the deactivation of the clock and the calculation of the time of absence of the said accessory or tool from the trolley take place when the processing of the video camera image corresponds to an act of repositioning the said accessory and/or of the said tool on the said trolley.

With reference to the embodiment in which the accessory and/or tool code is memorized in an electronic tag, the activation of said clock and its deactivation take place respectively at the instant in which the outcome of the comparison of the measured distance value with the distance reference value corresponds to a distance of the accessory and/or tool to which the corresponding tag is associated, which distance is greater than the reference one and the instant in which the result of the comparison of the measured distance value with the distance reference value corresponds to a distance of the accessory and/or tool to which the corresponding tag is associated, which distance is less than the said distance reference value.

In both variants, the measured time is stored in the database including the univocal identification code associated with the corresponding accessory and/or corresponding tool together with the date of detection of said measurements, this operation being performed individually for each accessory and/or for each tool .

It is therefore possible to carry out assessments relating to the usage times of the accessories and/or tools present on the trolley and those linked to each single event of picking and removal and subsequent repositioning or approach to the trolley.

In the case of the identification code being memorized in an electronic tag, it is possible to determine the aforesaid times also with reference to the permanence of said accessory and/or tool within the boundary defined by said reference distance.

The duration of the individual events of removal of the accessory/s from the trolley are indicative of the times of use of the accessories or tools and therefore related, on the one hand, to the duration of the operation, with reference to the condition of the intervention site, but on the other hand, also, to said duration with reference to minimum times required for carrying out said operation.

In this case, the control unit can be provided with a memory or a memory area in which a database of minimum processing times for different types of interventions is stored whose records include the type of intervention, the accessories and/or the tools foreseen for this type of intervention, while the program comprises instructions for configuring and enabling the processing unit to carry out a comparison between the duration of the removal times from the trolley of said accessory and/or of said tool and/or of the removal times of said accessory and/or of said tool beyond the reference distance, for storing of said removal durations and of the detection date, as well as for a optional generation of reports or warnings based on said comparison of the removal duration of the individual accessories and/or tools and the corresponding minimum duration.

According to an improvement, said program can include instructions for comparing the type of accessories and/or tools that have been picked up, removed and then repositioned on the operating trolley with the list of accessories and/or tools recorded in said database and correlated to the execution of a pre-established activity or a pre-established intervention, optionally to memorize any differences and/or inconsistencies between the accessories and/or tools actually taken and the accessories and/or tools envisaged for the execution of said intervention and/or optionally generate and transmit notices, alerts and/or reports.

Still according to a possible embodiment, the processing program can further comprise the instructions for comparing the removal times of the single accessories and/or of the single tools taken from the trolley, removed and then replaced on the same with reference to a pre-established activity or a pre-established intervention and verify the presence of differences greater than a certain tolerance.

Yet another possible variant can provide that when the removal time of one or more of the accessories and/or tools from the trolley exceeds a pre-established maximum threshold, an alarm is generated which warns the user in order to check whether one or more accessories and/or one or more tools have been forgotten by the staff who use them.

The hardware configuration of the system makes it possible to easily provide further additional functions and/or to integrate further operating units both of the hardware and of the software type which allow the detection of other functional data to obtain further information which synergistically integrate the basic functions above listed.

Thus, for example, it is possible to associate the trolley control unit with a communication interface with the user, for entering data and/or settings and/or for indicating the start of an intervention activity.

In particular, and without the following list being considered limiting or exhaustive, the user who picks up a trolley can enter his/her own identification code, the date and/or the start time of picking up the trolley and/or the date and time of abandonment in the rest position of the trolley, other information relating, for example, to the conditions of the accessories and/or tools present on the trolley at the start of the activities and/or at the end of the same.

An embodiment may also provide that the processing unit records a log file relating to the various users, the dates and times of use of the trolley by various users and in combination also the relative comments and/or notes entered by them.

In one embodiment, each user can be provided with a unique identification code which can be either in the form of an optical code according to one or more of the variants described above with reference to said optical code or in the form of an electronic identification tag according to one or more of the variants described above, which identification code is automatically read by the reading unit of the trolley control unit and is compared with a list of authorized users in order to make the trolley free at use for said user and/or to prevent said user its use.

A further possible embodiment which can be provided, like the previous ones, in any combination or sub-combination with one or more of the said previous embodiments, the trolley control unit can be provided with a wired and/or wireless communication unit with a central management unit which is provided with a general software for the acquisition, storage and/or analysis of the data acquired by the trolley control unit and consisting, in a non-limiting way, of one or more of the functions described above.

In addition to the communication possibilities with a central management unit, it is possible to provide that both the trolley control units and the central management unit can be equipped with wireless communication units with portable devices of each user, such as for example PDA or smartphones or the like, on which portable devices an app can be loaded which renders the said portable unit capable of loading pre-established information among those acquired according to one or more of the previous described embodiments and/or performing display and/or analysis operations on said information.

An embodiment may provide that in combination with any one or more of the preceding embodiments, each trolley and/or each control unit of each trolley is provided with a position sensor, such as a GPS sensor or the like, whereby the program executed by the control unit or its processing unit, can generate a trace of the path followed by the trolley during the execution of the activities which trace can be located in a map representing the environment in which the trolley has moved, while in combination with said path it is also possible to identify the stops and measure the stop times of the trolley.

In an embodiment, when for example the activities to be carried out are known in advance and follow precise patterns, as in the case of the trolleys supplied to the cleaning staff of hotels, offices or other similar environments, the program can include the instructions for the processing unit to make a comparison between the time duration of the stops and the duration of the removal time from the trolley of one or more accessories and/or tools and verify the compatibility of said time durations, generating in case of non-correspondence within pre-established tolerances, alerts and/or reports and storing them in a log file.

Yet another embodiment which can be provided alternatively or in combination with any of the previous ones, can provide that the program executed by the control unit or by the computer includes the instructions for carrying out a comparison between the accessories and/or tools removed from the trolley and one or more activities foreseen in correspondence with a predetermined stop, a correlation database being provided between the stops and the activities to be performed at said stops.

In this case it is possible to detect whether or not the service personnel used the correct accessories and/or tools to carry out the activities envisaged for the said stop.

Another possible feature of the trolley according to one or more of the previous embodiments can provide, at least for some of the accessories and/or tools, in particular for accessories and/or tools subject to wear, the detection of the condition of wear of said accessories and /or of the said tools.

Depending on the type of accessories and/or tools, it is possible to provide different types of sensors positioned in a housing of the trolley which are specifically and exclusively dedicated to said accessory and/or to said tool.

A non-exhaustive list of such consumption and/or wear sensors may include units of measurement for the weight of the accessory and/or tool, units of measurement for the level of filling of containers, units of measurement for the condition of soiling and/or modification of surfaces, for example by reflection of light radiation at one or more pre-established frequencies and other units of measurement of chemical and/or physical effects which are typical for the specific accessory and/or tool.

The power supply of the control unit on board the trolleys is ensured by an accumulator, which can be either simply replaced with a charged accumulator when the charge level drops below a certain limit value which is signaled thanks to a warning of any kind , or which is associated with a recharging unit, which can be connected to an electrical source.

In a non-limiting exemplary embodiment, the trolley can be provided in combination with a parking station, which parking station can be provided with a terminal for automatic electrical coupling of an electric source to a corresponding terminal of said generator for recharging provided on the trolley, being the two terminals shaped in a corresponding manner and such that when the trolley is positioned in the parking station the two terminals engage with each other generating the electrical connection between the power source and the generator for recharging the on-board battery of the trolley.

Similarly, when a parking station is provided, it is possible to provide a wired communication connection of the trolley control unit with a communication network to a central server which connection is made similarly to that for connection to the power source, i.e. formed by a terminal on the trolley and one present in the station which terminals couple to each other automatically, generating the electrical connection between them, with the positioning of the trolley in the parking station.

Further improvements and/or characteristics are the object of the dependent claims.

The invention also refers to a method of managing trolleys for transporting accessories and/or tools for carrying out interventions or activities, which method provides for:
associate a unique identification code to at least one accessory and/or at least one tool loaded on said trolley, preferably to more than one accessory and/or more than one tool or to all the accessories or to all tools loaded on said trolley, each accessory and each tool being provided with its exclusive unique identification code;
providing on the trolley a unit for detecting the act of withdrawing and/or removing said at least one accessory and/or said at least one tool from said trolley and for detecting the act of repositioning said at least one accessory on said trolley and/or of said at least one tool;
determining the time duration of the period of removal, or of absence of said at least one accessory and/or of said at least one tool as the time difference between the instant of detection of the withdrawal and/or removal of the same from the trolley and the instant time for detecting the repositioning of the same on the trolley;
comparing the duration of said removal of said accessory and/or said tool beyond the reference distance with pre-established times for said removal duration and
generating warnings and/or signals and/or reports when the duration of the removal period of an accessory and/or a tool is not compatible with a corresponding pre-established time;
performing said procedure for each accessory and/or each tool for which an act of withdrawal and/or removal from said trolley and a subsequent act of repositioning of said accessory and/or of said tool on said trolley has been detected.

A variant embodiment of the said method provides for the measurement of the distance of the said accessory and/or of the said tool from the said trolley and the comparison with a previously set maximum reference distance value;
the activation of a clock for measuring the time of removal from the trolley, or from the control unit of a corresponding accessory and/or of a corresponding tool when the measured distance of said accessory and/or of said tool from said trolley, or from said control unit exceeds said maximum reference distance;
the deactivation of said clock for measuring the time of removal from the trolley, or from the control unit of a corresponding accessory and/or of a corresponding tool when the measured distance of said accessory and/or of said tool from said trolley, or from said control unit is less than said maximum reference distance;
comparing the duration of said removal of said accessory and/or said tool beyond the maximum reference distance with pre-established times for said removal duration and
generating warnings and/or signals and/or reports when the duration of the removal period of an accessory and/or a tool is not compatible with the corresponding pre-established time;
carrying out said procedure for each accessory and/or each tool for which a distance away from the trolley, or from the control unit, greater than said maximum reference distance has been measured.

The aforementioned method can provide in any combination or sub-combination further process steps which are described as functionalities provided for the control unit and/or the associated processing unit and which steps are encoded in the form of instructions contained in the executed or executable programs by said control unit or by the related processing unit according to one or more of the embodiments, variants and/or characteristics described above.

### BRIEF DESCRIPTION OF THE FIGURES

Examples of implementation of the trolley and of the method according to the present invention are illustrated in the attached figures and will be described below with reference to said figures.
Figure 1 shows schematically a trolley according to the present invention which forms part of a system according to the present invention.
Figure 2 schematically shows the starting and ending principle of the process for measuring the time of removal of one or more accessories and/or tools from the trolley.
Figure 3 shows a schematic example of use of a trolley according to an embodiment of the present invention.
Figure 4 shows a flow diagram of the procedure for managing the trolley and the accessories and/or tools with reference to the measurement of the removal time and the interpretation of the results of this measurement.
Figure 5 shows an example of an optional procedure which may be provided in parallel or in series with the management procedure according to Figure 4 and which provides for the verification of the conformity of the tools with the activities and/or interventions to be performed.

### DETAILED DESCRIPTION OF THE FIGURES

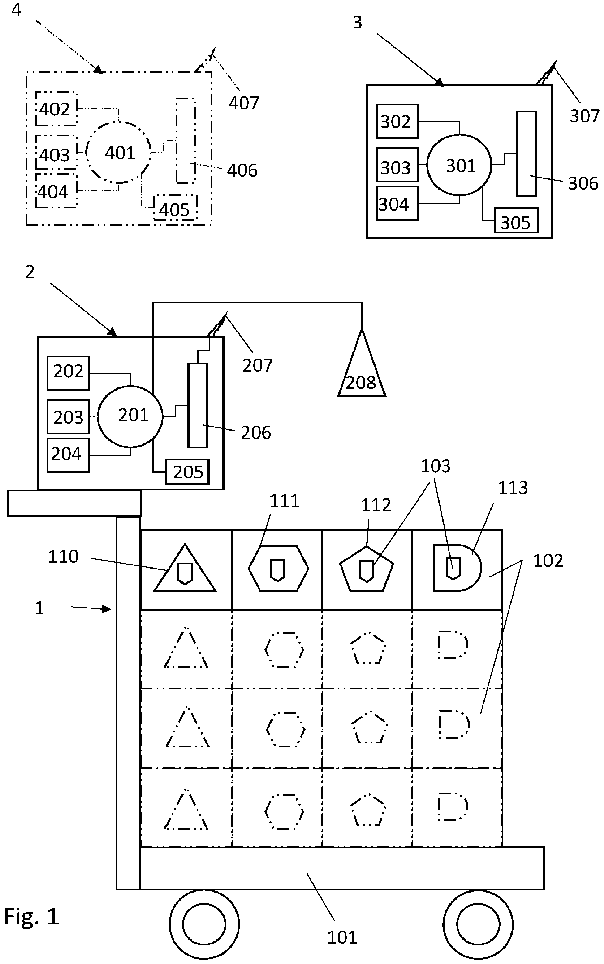

Figure 1 shows an exemplary embodiment of a trolley according to the present invention. The trolley and the system in which it is included are shown schematically. In particular, the trolley 1 is shown with a vehicle part 101 provided with wheels and with an upright structure which carries a handle or a grasping handlebar at its end. The trolley can have any shape and/or can be produced by any construction method and can be either operated by human force or motorized or provided with an actuation of the servo-assisted type.

The trolley comprises a plurality of housing compartments 201 which can be made in the form of a tray and/or drawers and/or niches and which can be fixed or removable.

Each compartment 102 is intended to house one or more types of objects, such as accessories and/or tools for carrying out activities. In the schematic example the plurality of compartments 102 is indicated by dashed lines, as well as the plurality of different objects.

The upper floor in which the compartments are in continuous lines has four compartments each one of which houses a different type of object being highlighted by a geometric shape and indicated by a corresponding number, respectively 110, 111, 112, 113.

The fact that a type of object is housed in a corresponding compartment, and that no housing compartments 102 are shown which contain two or more different types of objects 110, 111, 112, 1113 must not be understood as limiting, since the latter possible option even if not explicitly represented.

Reference 103 indicates a so-called electronic label or tag which is associated with each of the objects 110, 111, 112, 113.

The possible typologies of these tags are many and the person skilled in the art can choose among those known, those which best adapt to the contingent conditions of use of the objects and to their nature.

A non-limiting embodiment provides that said electronic tags 103 consist of so-called RFID tags.

In one embodiment, each electronic tag is provided with at least one memory and at least one wireless-type communication unit.

An embodiment of the present invention provides that unique identification codes are recorded in the memory, each of which is uniquely associated with a specific object and/or with a specific type of object 110, 111, 112, 113.

As shown in figure 1, the trolley 1 is associated with a control unit 2 which can be configured in various ways.

In the illustrated embodiment, the control unit 2 represented in figure 1 is shown in the most complete configuration and comprises a processing unit 201 to which communication interfaces with the user are connected, such as for example a screen 202, a keyboard 203. Alternatively, it is possible that the screen and keyboard are a single device such as, for example, a touch-screen device or the like.

In a memory 204 connected to the processing unit 201 different data databases and different control programs can be stored which encode the instructions for the execution of different functions by the control unit when they are executed by the processing unit. The stored databases and stored programs can be of different types and are configured in a corresponding way to make possible that the control unit carry out the functions that will be described in greater detail below, making the control unit capable of performing said functions.

A communication unit 206 allows to communicate in reception and in transmission thanks to at least one antenna 207 with the single electronic tags 103 and optionally also with a remote control unit globally indicated with 3.

According to a further feature, 208 represents at least one video camera or a group of video cameras whose field of view allows monitoring of the accessories and/or tools that are picked up and removed from the trolley and/or those that are loaded onto it.

Said video camera 208 can also comprise two or more video cameras or a combination of optical type image acquisition units while, in a variant embodiment which can be provided alternatively or in combination with the ones, in which the identification code of the accessories and/or tools is stored in an electronic tag, the image acquisition unit or units are designed to recognize and possibly decode optical or visual type identification codes, such as graphic, alphanumeric codes, a color or a combination of colors, a shape or a combination of forms or combinations thereof. As will be further clarified, the following description of the illustrated embodiment is directed to the variant in which the identification codes are memorized in electronic tags coupled or removably coupled to said accessories or to said tools or to at least part thereof. However, many of the functions and also of the hardware/software components described are applicable "mutatis mutandis" also to the variant described above and which uses optical type identification codes and image acquisition units combined with an image processor, for example of the type running computer vision algorithms. In particular, the variants of the hardware/software configuration and of the operating and functional steps with respect to what is described with reference to the figures, are obvious variants for the person skilled in the art when one takes into account the different functional capacities between identification codes stored on electronic tags and optical codes which are physically applied to the accessories or tools.

According to an embodiment which is illustrated, the control unit 2, i.e. the processing unit, executes a computer vision program thanks to which the aforementioned accessories and/or the aforementioned tools can be recognized. The information collected can be managed according to one or more of the methods and executive forms described above or below.

Similarly, when a portable unit 4 is provided for the service personnel and/or a remote unit, the image processing process can be performed in the portable unit 4 or in the remote unit 3 or for a part in two or more of the processing units of the control unit 2, of the portable unit 4 and/or of the remote unit 3. Even the simple viewing of the acquired images can be performed on the portable unit 4, on the remote one 3 and/or on the display of the control unit 2 on the trolley.

The power supply of the control unit is supplied by a power supply 205 which can be a battery power supply, in particular a power supply equipped with rechargeable batteries and a recharging generator which has a connection interface with an energy source, such as a network socket or the like.

In relation to the control unit 2, as already mentioned above, this can also be made with a minimal configuration, in which the processing operations are carried out by means of a separate local unit with which said control unit can communicate via the communication unit 106, being said separate local unit provided with a processor and memories for an app which contains the instructions for carrying out the intended functions. Such a separate local unit can be in the form of a user's portable device, such as a smartphone or the like.

A schematic example of the portable local unit can also be represented analogously to that of the remote unit 3 and is shown in figure 1 with broken lines and indicated with 4.

Specifically, the portable unit 4 in its generic configuration which, however, can be modified at will according to contingent needs, comprises processing units 401, to which communication interfaces with the user are connected, such as for example a screen 402, a keyboard 403. Alternatively, it is possible for the screen and keyboard to be a single device such as, for example, a touch-screen device or the like.

In a memory 404 connected to the processing unit 401 different data or databases and different control programs can be stored which encode the instructions for the execution of different functions by the remote unit 4 when they are executed by the processing unit 401. The stored databases and the stored programs can be of different types and are configured in a corresponding way to make possible the functions which it is desired to make executable by said remote unit and which will be described in greater detail below, making the remote unit capable of perform these functions.

A communication unit 406 allows communication in reception and transmission thanks to at least one antenna 407 with the control unit 2 and/or with a remote unit 3 and/or optionally also with the single electronic tags 103.

The power supply of the control unit is supplied by a power supply 405 which can be a battery power supply, in particular a power supply equipped with rechargeable batteries and a recharging generator which has a connection interface with an energy source, such as a network socket or the like.

The local unit 4 can be configured thanks to the aforementioned App to communicate both with the trolley control unit 2 and also with the remote unit 3.

Depending on the functions to be implemented in the system and in the trolley, it is possible that in the configuration which includes a combination of a control unit 2 on the trolley, a local portable unit 4 of the user and a remote unit 3, the processing is carried out depending on the computational burden and the need for hardware and energy, in a distributed way on the said units thus allowing to reduce the hardware of the control unit 2 on the trolley and therefore the energy consumption of the same and above all moving the communication part with remote 3 on the user's mobile device 4.

In fact, the communication between electronic tags and between the trolley control unit 2 and the user's portable unit 4 can be performed using light wireless communication protocols such as communication of the Bluetooth, Zigbee, NFC type or other types of similar protocols.

By providing RFID tags on the objects, communication between the control unit 2 on the trolley 1 and the individual electronic tags 103 can take place using a communication mode of the type known with the term transponder, in which the tags exploit the energy of the carrier generated by the control unit 2 to modulate the data thereon and then redirect the modulated signal to the control unit 2.

Obviously many other types of communication protocols are possible which the person skilled in the art can choose according to the contingent conditions of use of the system.

A non-limiting embodiment of a remote unit, such as a remote server or a cloud server, can be like the one indicated by 3 in Figure 1. However, it is possible to configure the remote unit 3 in any way the person skilled in the art considers suitable for the contingent conditions and the functions that said remote unit will be destined to have.

In the illustrated example the remote unit 3 comprises a processing unit 301, to which interfaces for communication with the user are connected, such as for example a screen 302, a keyboard 303. Alternatively, it is possible for the screen and keyboard to be a single device such as, for example, a touch-screen device or similar.

In a memory 304 connected to the processing unit 301 different databases and different control programs can be stored which encode the instructions for the execution of different functions by the remote unit 3 when they are executed by the processing unit 301. The stored databases and the stored programs can be of different types and are configured in a corresponding way to make possible the functions which it is desired to make executable by said remote unit and which will be described in greater detail below, making the remote unit capable of perform these functions.

A communication unit 306 allows to communicate in reception and in transmission thanks to at least one antenna 307 with the control unit 2 and/or with a portable unit of the user 4 and/or optionally also with the single electronic tags 103.

The power supply of the control unit is supplied by a power supply 305 which can be a battery power supply, in particular a power supply equipped with rechargeable batteries and a recharging generator which has a connection interface with an energy source, such as a network socket or the like.

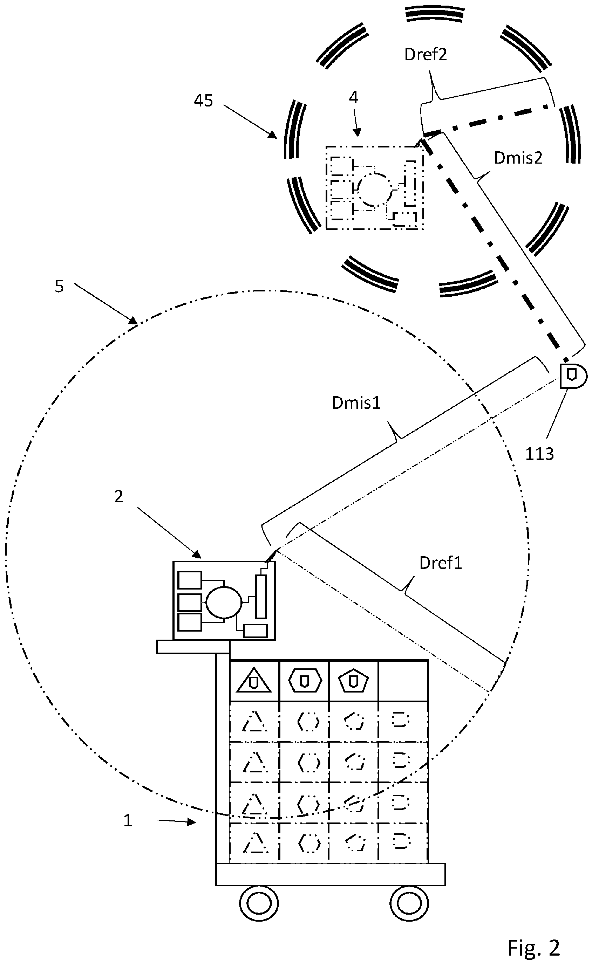

According to a first embodiment of the present invention, shown in figure 2, the functions performed by the system consisting of the aforementioned trolley 1 with the control unit 2 and with the housing compartments 102 for at least one type of accessory and/or tool and /or for a plurality of accessories and/or tools 110, 111, 112, 113, each provided with an electronic tag 103, comprise the steps in which:

The control unit 2 communicates with the electronic tags 103 of the accessory(s) or tools 110, 111, 112, 113, receiving from the said ones the unique identification codes which are already stored in a database in the memory 203 of the control unit 2 or which are memorized upon receipt by said control unit.

Once the identification codes have been received, the control unit 2 determines the distance of the individual electronic tags 103 with respect to said control unit 2 or to a reference point which is indicated here as the antenna 207. The aforementioned function of determination of the distance of the electronic tags 103 takes place thanks to a program for calculating the distance of the electronic tags 103 which includes the instructions for the processing unit 201 to perform said function and which is resident in the memory 203 and is executed by the processing unit elaboration 201.

The specific ways of determining the distance of an electronic tag from a reference unit with which it is in communication or from which said tag is interrogated can be implemented in various ways.

A more general method provides for determining the distance of the electronic tag thanks to a triangulation of the same one by means of at least two antennas associated with the communication unit 206 of the control unit 2 and arranged at a predetermined distance from each other. In this case it is possible to use the different intensities of the signal received from the two antennas to determine the position thanks to a simple trigonometric calculation.

Other ways of determining the distance can be obtained by exploiting the intrinsic functions of the communication protocols, such as for example the Bluetooth protocol which allows the determination of the distance directly from the data processed for the execution of said protocol.

In the state of the art, further multiple alternatives are known which the person skilled in the art can choose according to the contingent conditions of the chosen hardware and/or functions, as well as for example also the conditions relating to computational burden and energy consumption.

The measure of the distance of the electronic tags 103 correlated to the identification codes of the accessories 110, 111, 112, 113 allows to establish which of these accessories and/or tools has been picked up and removed from the trolley for carrying out the activities envisaged in the site of intervention.

According to a preferred embodiment, it is possible to set a maximum reference distance value with respect to the trolley 1, i.e. to the control unit 2 and to the relative antenna 207. This is shown in figure 2 with the line defining a virtual border 5 and with the distance indicated by Dref1.

An accessory or tool 113 with a tag 103 is positioned at a distance greater than the distance Dref1 which is indicated with Dmis1.

The processing unit 201 of the control unit 2 also comprises a clock not shown in detail which can be controlled by said processing unit 201 and which allows time measurements to be made between a start instant and an end instant.

According to an embodiment, a program is stored in the memory 203 of the control unit 2 which includes the instructions for allowing the processing unit to operate as a comparator between the set reference distance Dref1 and the measured distance Dmis1 and to establish whether the distance Dmis1 is greater or less than the distance Dref1.

If the Dmis1 distance is less than the Dref1 distance, the program does not start the time measurement using the clock. When from the comparison between Dmis1 and Dref1 it results that the measured distance Dmis1 of the accessory or tool 113 is greater than Dref1, the processing unit 201 starts the clock to perform a time measurement. This measurement is kept active as long as the measured distance Dmis1 of the accessory or tool 113 is greater than the reference distance Dref1. The time measurement is interrupted and the temperature measurement datum is stored, preferably in a univocal way at least correlated with the identification code of the accessory and/or tool 113 when the measured distance of said accessory and/or tool Dmis1 is less than the reference preset distance Dref1.

Thanks to the above, the system is therefore able to determine the duration of a period of removal of the accessory and/or tool from the trolley 1 for each accessory and/or tool provided on said trolley 1 and which is associated with an electronic tag with a unique identification code dedicated to a specific accessory and/or specific tool.

Considering that, in carrying out interventions and activities, such as for example cleaning or sanitizing operations of sites which include a plurality of environments distributed according to a pre-established planimetric configuration, for example offices, hotels, but also private homes or the like, the staff operator is equipped with such a trolley which she/he generally leaves out of the environments, such as rooms or the like, in which she/he has to carry out the intervention and which staff operator each time picks up different accessories and/or tools for the execution of a plurality of different interventions, the times of removal of the accessories and/or tools are in good approximation corresponding to the execution times of the activities for which they were taken from the trolley.

By defining processing times on the basis of statistical averages suitably integrated with margins of error, it is possible to verify, thanks to the times of removal of the various accessories and/or tools from the trolley, whether or not these times are compatible with the average duration values of the foreseen operations.

This makes it possible to understand, in particular in relation, for example, to cleaning times, the initial condition of the intervention site and therefore better manage the times and costs of these operations. Furthermore, it also allows to understand whether or not the staff has operated efficiently and consistently with the average processing times.

As further information that can be derived from the determination of said removal times of one or more different accessories and/or tools from the trolley 1, it is also possible to verify whether the accessories withdrawn and/or the tools withdrawn are compatible with reference to the operations to be performed at the intervention site.

In particular, this can be useful when the intervention activities in the various sites or environments are predefined and organized according to a pre-established working plans that the personnel must follow and which already provides for the definition of pre-established types of intervention in the various intervention sites and therefore the use of pre-established accessories and/or tools to carry out the said pre-established intervention activity or activities.

In this case, having the unique identification code available for each accessory and/or tool or at least for each different type of accessory and/or tool, it is possible to provide a unique correlation list between the identification code and the type of tool, so that thanks to the process described above, it is also possible to establish whether or not the accessories and/or tools taken from the trolley 1 comply with the intervention activities foreseen and planned for an intervention site.

Furthermore, starting from here, when the types of accessories and/or tools do not coincide with those envisaged for the planned intervention activities, it is possible to determine whether there is an execution error by the personnel in charge and/or if instead on the site of intervention the situation actually detected by the personnel required a different or additional activity due to the contingent conditions of the intervention site.

As is evident and as will also be evident from the following description, the extreme flexibility of the trolley and of the system in which it is integrated allows the basic functions to be modified with a series of further functions essentially linked to a modification of the software performed by the control unit processing 201 of the trolley control unit 2 and/or in combination at least in part by the portable unit 4 and/or by the remote unit 3.

Figure 2 schematically represents the condition in which the accessory or tool 113 has been taken from the trolley and moved to a distance Dmis1, greater than the reference distance Dref1 and therefore outside the virtual boundary 5.

Although only one accessory or tool 113 is shown in Figure 2, the above disclosed functions can also be performed in parallel for one or more further accessories and/or tools 110, 111, 112 which have also been taken from the trolley and moved out of the virtual boundary 5.

The scanning of the electronic tags 103 of all the accessories can take place in succession by means of a multiplexing protocol or the like, in transmission and/or in reception.

As regards the measurement of the distance of the accessory(s) or of the tool(s), or of the related electronic tags 103 from the control unit 2, i.e. from the trolley 1, the above function can be performed repeatedly with a predetermined repetition frequency, in such a way to provide a continuous measurement of the position of the accessory or accessories and therefore a measurement of the duration of the period of removal of the accessory/s from the trolley 1 or from the control unit 2 beyond the virtual boundary 5 which is relatively precise within the scope of the intended functional purposes or of the information that is intended to derive from said time measurement.

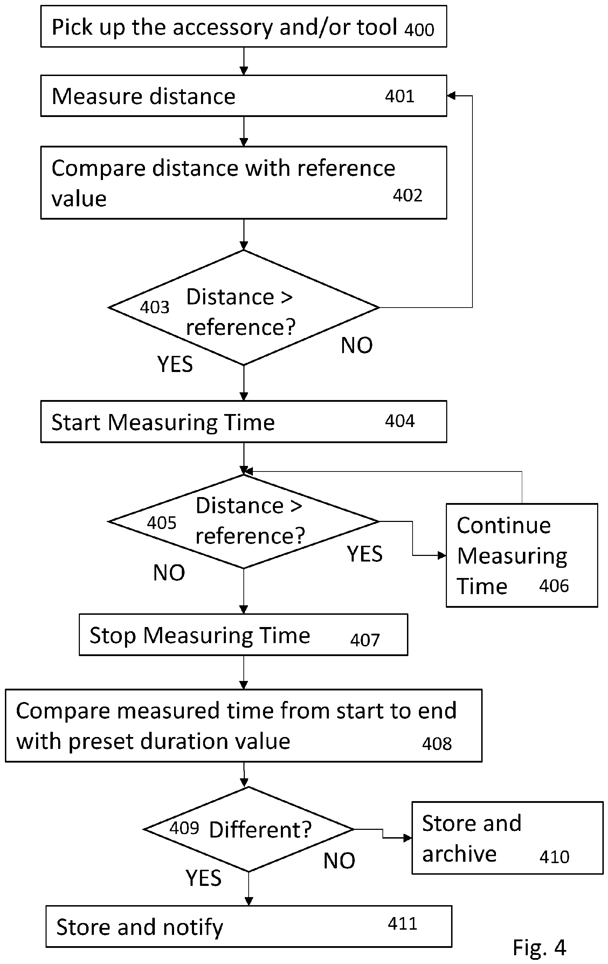

Figure 4 schematically shows a flowchart relating to the basic functionality of the system which includes the trolley 1, the control unit 2 and one or more accessories and/or tools provided with a dedicated electronic tag in which a unique identification code for a corresponding accessory and/or tool.

Step 400 provides for an operator to pick up one or more accessories or one or more tools from trolley 1. Step 401 indicates the measurement of the distance of each of said one or more accessories and/or one or more tools with respect to a reference point associated with the trolley 1 and/or with the control unit 2, such as for example the antenna 207. Step 402 provides for the comparison of the measured distance Dmis1 for each accessory and each tool taken from the trolley 1 with respect to a pre-established reference distance Dref1. The analysis of the result referred to in step 403 provides for two conditions, one in which the measured distance of a predetermined accessory or tool Dmis1 is less than the distance Dref1 and the other in which said measured distance Dmis1 is greater than the reference distance Dref1. In the first case, the control unit 2 continues in the operations of measuring the distance of the electronic tag of the corresponding accessory and/or tool with the pre-established repetition frequency. In the second case, step 404 is activated, i.e. the clock for measuring the time duration in which said distance Dmis1 for said accessory or tool remains greater than the reference distance Dref1.

As indicated by steps 405 and 406, the measurement of the distance Dmis1 for the corresponding accessory or tool is continued at the predetermined repetition rate as long as the measured distance Dmis1 remains greater than the reference distance Dref1.

When this condition fails, i.e. when the measured distance Dmis1 falls below the reference distance Dref1, i.e. when the corresponding accessory and/or tool returns within the virtual boundary 5 with respect to trolley 1, then it is executed step 407, in which the clock which measures the duration of the period of removal of the corresponding accessory and/or tool from trolley 1 is stopped.

The example of figure 4 is limited to a use of the duration of removal of the accessory/s and/or the tool/s from the trolley 1 which has the purpose of verifying the duration of the intervention from the point of view of its conformity or an adequacy with respect to pre-established standard durations for the envisaged and planned intervention activities.

At step 408, therefore, for each accessory and/or for each tool that have been picked up and removed from the trolley 1 beyond the virtual boundary 5, the time measurement from the start to the end of the measurement is compared with the value of the pre-established duration of use of the accessory or accessories and/or tools at the intervention site and for a planned intervention to be performed at said site.

The outcome of the comparison 409 can give rise to different types of reactions of which in figure 4 only examples are cited which shall not be considered limiting. When the result of the comparison is that the duration of removal of the accessory and/or tool from the trolley 1 is identical to that envisaged for the intervention planned at the site of intervention, then the data relating to the duration and the outcome of the comparison are stored in a report as indicated with 410. The report can include further indications, such as the identification code of the corresponding accessory and/or tool, the type of this in clear text, the date and time of the intervention and other data relating to the intervention site which can be inferred from an activity planning workflow and/or which concerns conditions of the intervention site which can be set and added by personnel in the form of notes to said record during the storage process.

On the other hand, when there is no agreement, within the tolerance limits, between the duration of the removal period of the accessory/s and/or the tool/s with respect to the standard duration envisaged for the planned intervention, then it is possible to perform, for example, a step like that indicated with 411 and which alternatively or in addition to the step 410 summarized with the term storage also provides a step for generating notices, alerts or service communications and/or notes.

As it will apparent below, this basic process of Figure 4 can easily be supplemented with additional functionalities by using additional programs that include instructions for performing these additional functions.

In relation to figure 2 this figure shows a possible variant which provides for the combination of the control unit 2 of the trolley 1 with a portable unit 4. The optionality of this variant is highlighted by the fact that the portable unit 4 is illustrated with broken lines.

According to a non-limiting embodiment, the portable unit 4 can be configured and enabled, thanks to identical software as for the control unit 2, to perform the communication functions with the electronic tags of each of the accessories and/or tools taken from the trolley, to recognize the unique identification code of each of the accessories and/or tools equipped with an electronic tag and present on the trolley, as well as to set a reference distance Dref2 from a reference point associated with said portable unit and which defines a virtual boundary 45, to carry out a measurement of the distance Dmis2 of each accessory and/or of each tool from said portable unit 4, to carry out the comparison between Dref2 and Dmis2 for each accessory and/or for each tool, to measure the duration time of removal of each accessory and/or each tool equipped with an electronic tag from the portable unit 4, as well as to provide for the comparison of this duration of removal with the expected duration for the activity to be carried out at the intervention site and to interpret the outcome of the comparison in relation to pre-established conditions such as execution protocols of the planned intervention activities.

Thanks to this additional function, it is therefore possible to detect a more detailed behavior of the service personnel with respect to the activities to be performed. This is relevant, for example in the case of dangerous situations or accidents at work which may have been caused by incorrect behavior and against the rules by the staff and/or by unexpected events.

The exemplary flow chart of Figure 4 also applies directly to this variant which also provides for the portable unit 4 to be provided with similar functions as for the control unit, but referred as a spatial reference to the service person who carries the portable unit 4 and which takes the accessories and/or tools from the trolley 1.

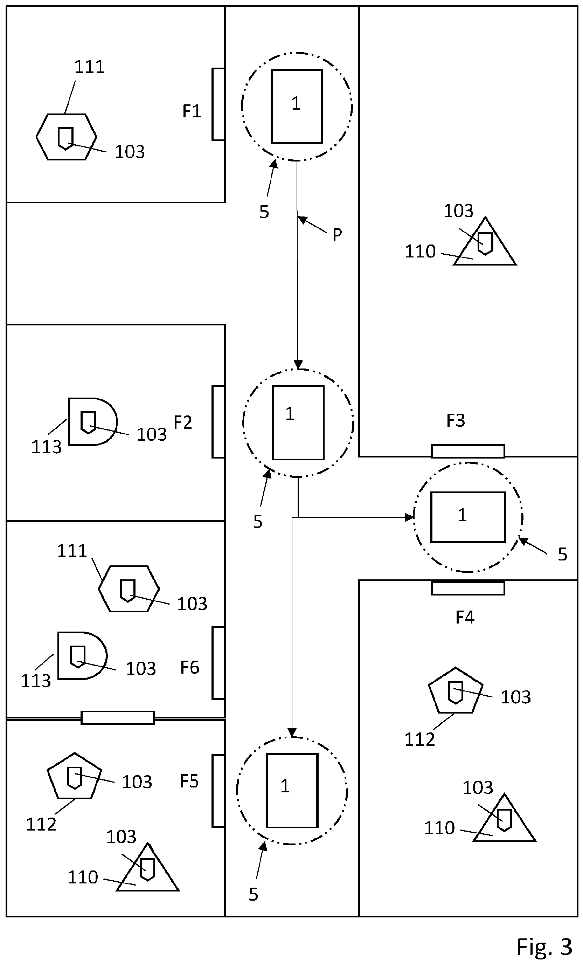

Figure 3 schematically shows an example of use of the trolley according to the present invention, or of the system comprising said trolley.

In particular, in the embodiment of the trolley 1 according to Figure 3, the control unit 2 or more generally the trolley 1 can be associated with a system for detecting the position of the trolley 1 with reference to a planimetric map of an environment which includes several intervention sites indicated with F1, F2, F3, F4, F5, F6.

Various state-of-the-art systems can be used as a system for detecting the position of the trolley, both separately and in combination. A possible system is for example constituted by the integration on the trolley 1 and/or in the control unit of a system of the GPS type. Alternatively or in combination, when for example we are dealing with confined environments with fixed and pre-established geometries of the position of the walls delimiting the intervention sites, such as rooms or the like, and passage ways, then it is possible to provide systems associated with these geometries which consist of signaling buoys associated with specific points relating to the geometries of the delimitation walls of the various intervention sites and/or of the paths in combination with sensors for detecting the signals of said buoys mounted on the trolley 1 and/or in the control unit 2 of the same.

Figure 3 shows the path P of a trolley 1 and the virtual boundary 5 associated therewith in the various stops along said route foreseen for said trolley with reference to the intervention sites F1, F2, F3, F4, F5, F6. In relation to the stops it should be noted that these can be identified by relatively large areas in which it is possible for the operating personnel to stop the trolley 1 for carrying out the intervention activities.

As schematically highlighted by showing different combinations of accessories 110, 111, 112, 113 inside the rooms F1, F2, F3, F4, F5, F6 which constitute the various intervention sites, in each intervention site the service personnel acts using different accessories and/or tools separately or in combination.

Thanks to the unique identification codes of the tool(s) and/or a correlation list between these and the different types of accessories and/or tools, it is therefore possible to detect which types of accessories and/or tools have been used in a pre-established site of intervention F1 to F6, as well as also verifying the statistical compatibility of the pick-up times of these accessories and/or tools with reference to the intervention activities.

When these are pre-established and repetitive, it is possible to establish in advance a work plan in which the route and/or also the trolley stops can be defined, the type of intervention for each stop and for each intervention site associated with the same stop and the type of accessories and/or tools to be used for the type of intervention as well as the standard duration of the execution of said intervention and therefore a minimum and/or maximum duration of the period of removal of the foreseen accessory/s and/or the foreseen tool/s for the aforementioned intervention activity and/or actually collected by the service personnel.

In addition to the possibility of comparing the data actually measured and recorded with the planned activities and the pre-established parameters of duration as well as the type of accessory and/or tool, and therefore the possibility of detecting a discrepancy with respect to the planned interventions and the methods of execution of the same, the system described above further allows to also verify whether the service personnel have performed unplanned activities in one or more intervention sites, to identify these intervention sites in which said unplanned activities have not been performed and to also identify, on the basis of the or of accessories and/or tool(s) not foreseen for the execution of the planned activities, and/or how long these accessories and/or tools have been removed, what type of additional unplanned intervention has most likely been carried out and how much are the costs of such intervention in relation to the time duration measured according to the duration of removal from the trolley of the accessory/s and/or the tool/s not foreseen by the planned interventions.

For example, with reference to sites F3 and F4, the use of the accessory and/or tool indicated with 110 is envisaged, which is considered the one corresponding to the planned intervention in said sites. However, the system has detected that a further tool or accessory 112 has been picked up from trolley 1 at the stop for sites F3 and F4. If the picking up of this accessory coincides substantially with that of the accessory 110 in time, then it is also possible to establish that the additional accessory or tool was used to carry out an intervention on the F4 site.

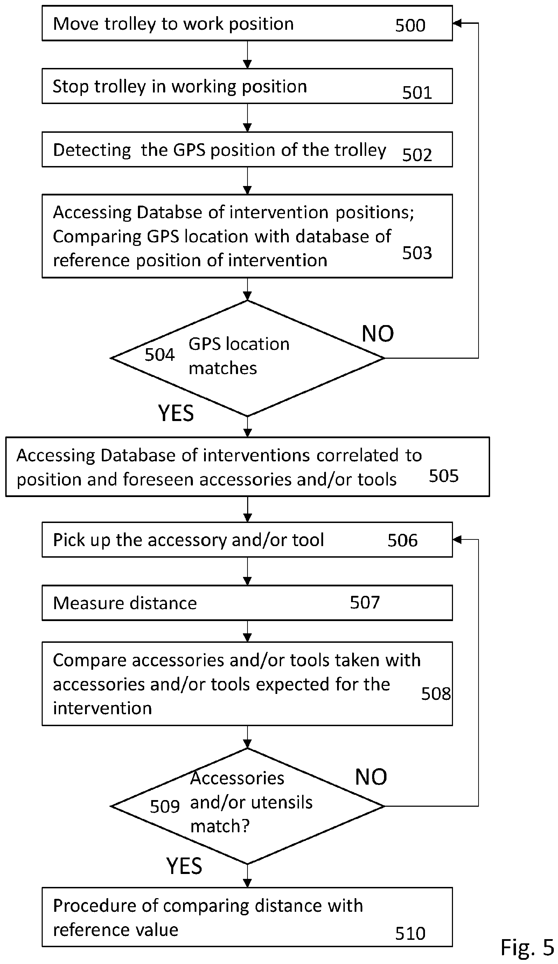

Figure 5 shows a flow diagram of the process steps relating to an integrative function which can be performed thanks to a software including the appropriate instructions from the hardware system according to one or more of the illustrated embodiments and which can find application in the method of use of the system according to figure 3.

In this case, the step 500 provides for the trolley to be moved along a path up to a stop 501 in a working position at a predetermined intervention site F1, F2, F3, F4, F5 or F6.

The working position is detected for example by a GPS system at step 502 and at step 503, said detected position is compared with a pre-established position or with a pre-established range of positions or a positioning area provided for stopping at the position referred to the corresponding site(s) of intervention. If, as indicated in step 504, the detected position does not conform to the position or positioning area referred to in step 503, i.e. positions, field of positions or pre-established positioning area, a warning is given and the trolley is moved 1 in the correct position. This step could be optional and alternatively, for example, the control unit could modify the expected and pre-established intervention duration by increasing or decreasing it taking into account said difference between actual position and pre-established position.

If said working position of the trolley 1 is acceptable following the outcome of the comparison, one proceeds with step 505, in which one accesses a database of operations correlated to the position of the operations sites and to the accessory(s) and/or to the or to the tools foreseen for the execution of the intervention activities planned for said intervention sites.

At the same time, or subsequently, when the staff picks up in step 506 the accessories and/or tools that they know are necessary for the intervention or interventions planned in step 506, the distance measurement 507 is started. In step 508 the types of the accessory(s) and/or the tool(s) picked up are compared with those envisaged for the planned intervention activities.

At step 509 if the outcome of the comparison shows differences between the types of accessories and/or tools picked up from the trolley, it is possible to receive a signal on the control unit 2 and/or on the portable unit 4 and therefore to correct the choice of the accessories and/or of the tools, while if the choice of the accessory(s) and/or of the tool(s) corresponds to that envisaged for the planned interventions, as indicated in step 510, the functions is started for measuring the removal duration of the accessories and/or of the tools, as described for example in the embodiment of figure 4 and/or in other embodiments and embodiments described above.

According to a further feature which can be provided in one or more of the embodiments described above in any combination or sub-combination, it is possible to associate a unique identification code to the trolley user. The trolley user's unique identification code can be memorized in an electronic tag associated with the user and/or also, when required, in a portable device 4.

Preferably one embodiment can provide that the electronic tag and/or the user's portable device 4 communicate with the trolley control unit 2 thanks to a communication protocol called NFC and which is widely known to those skilled in the art. In this case, upon simply approaching the user's electronic tag and/or the user's portable device 4 to the control unit 2 of trolley 1, the operations of verifying the electronic tag and automatic setting of trolley 2 are performed and of the system which includes it, such as for example the verification of the user's qualification to use the specific trolley in relation to the type of accessories and/or tools envisaged on the same and/or the recall by the control unit 2 of plans of work envisaged for said user that said trolley control unit 2 and/or portable unit 4 acquire alternatively and/or in combination with each other from the remote management unit 3. This can be managed directly by the works management and/or from the personnel office and/or from the procurement office.

In relation to management by the procurement office, according to a possible additional feature which however requires additional hardware and a corresponding control and management software for said additional hardware, both as regards its control and as regards the processing of the data supplied by said additional hardware, one or more of the housings 102 for at least some of the accessories or tools 110, 111, 112, 113 are associated with one or more sensors for measuring the wear and/or tear condition of the said accessories and/or tools.

Depending on the type of said accessories and/or tools, said sensors can be, for example and not limited to, sensors for measuring the filling level of containers and/or sensors for detecting the weight of an accessory and/or tool, sensors for measuring the level of consumption and/or soiling which measure, for example, a condition of the surfaces of an accessory and/or a tool in relation to the color and/or the transmission and/or reflection coefficient of electromagnetic radiation and/or electrical conduction and/or sensors for detecting the presence of specific gases and other types of sensors.

As previously indicated, the various functions described according to one or more of the described features and embodiments can be controlled by the control unit 2 of the trolley 1, and/or by the user's portable unit 4 and/or by a remote management unit 3. The various functions or part of the functions can also be distributed in relation to certain tasks necessary for the execution of the said functions in part on two or on all three of the said units 2, 3 and 4. For example and not limitedly, the management of databases and their conservation, as well as the management of reports and their conservation, as well as the analysis of the information collected can be performed by the remote unit as a post processing activity, while other information verification and control functions collections such as those which can have an immediate influence on the performance of the intervention activities can be carried out directly by the control unit 2 of the trolley and/or of the portable unit 4 alternatively with each other or in combination with each other.

There are many possible variants which can be implemented by generating, loading and executing specific software in the units 2 and/or 3 and/or 4, in which the instructions are encoded to make said units capable of executing said functions.

With reference to the previous description and the following claims, it is evident from the above that the present invention also refers to a system comprising a trolley and further hardware and software combined with said trolley and made according to one or more of the embodiments and features described and claimed and configured to operate according to one or more of the embodiments and features of the method as described and claimed.

According to a further embodiment which can be provided in any combination or sub-combination with one or more of the previous embodiments and possibly also as an alternative to the use of electronic tags associated with the various accessories and/or tools, the trolley can be associated with one or multiple video cameras, the viewing angle of which is such as to allow the detection and monitoring of the material, or the said one or more accessories and/or the said one or more tools that are positioned on the trolley and/or the said one or more accessories and/or the said one or more tools which are picked up and/or removed from said trolley and also repositioned on the said trolley.

The camera or cameras are provided in combination with an image processor, for example a so-called computer vision system, which is capable of recognizing and/or decoding graphic codes, such as bar codes and/or QR codes and/or alphanumeric codes and/or also identification codes consisting of colors or combinations of colors as well as identification codes consisting of the shape or combination of external shapes of the accessory(s) and/or tool(s).

The computer vision system is able to identify and classify said one or more accessories and/or said one or more tools, the direction of movement with respect to the trolley, while a control unit processes said data and generates automatic reports upon request which consist of lists of said accessories and/or tools entering the trolley, i.e. positioned on the trolley itself and leaving the trolley, or taken away from the trolley itself, date and time of the positioning and/or removal or distance recorded for each accessory and/or tool and possibly additional data relating to service personnel and/or planned tasks.

This computer vision system consists of an image processing program which can be loaded into the trolley control unit and executed by it, said one or more video cameras being connected to a corresponding input of a video subsystem of said control unit of the trolley. In combination or alternatively, the acquired images can also be transmitted for viewing and/or processing to the aforementioned portable unit of the user and/or to the remote unit.

With the exception of the functionalities and method steps related to measuring the distance of an accessory or a tool from the trolley and to the functionalities for calculating the duration of the period of removal from the trolley of an accessory or a tool, the functionalities and steps operational, as well as the additional components described with reference to the embodiment which provides for identification codes memorized in electronic tags associated with said accessory or with said tools, can be used with obvious adaptations and/or modifications also to the variant which provides for optically detectable and readable identification codes by means of one or more of these cameras. In a further possible embodiment, the variant in which the identification codes are of the optical type and the variant in which the identification codes are stored in electronic tags can also be provided in combination with each other.

## Claims

1. Auxiliary trolley for the transport of material and/or equipment to be used in various operations, such as maintenance operations, and in particular cleaning and/or sanitization and/or disinfection or other similar activities, which trolley includes:
a trolley base carrying a structure for housing and/or storing accessories, in particular consumables for carrying out activities, tools for carrying out activities or other accessories, or the like,
which housing and/or storage structure can comprise one or more compartments and/or one or more trays for housing/storing said accessories and in which
said trolley comprising a control unit with at least one unit for reading a unique identification code, which identification code is made alternatively or in combination
in an optically readable form, such as an alphanumeric code and/or a graphic code and/or a color or a combination of colors and/or a shape or a combination of shapes, the reading unit being a television camera or the like in combination with an image processing unit configured to recognize in the images acquired by said video camera said alphanumeric code and/or said graphic code and/or said color or said combination of colors and/or said shape or said combination of shapes , or
said identification code being encoded in digital form in an electronic type label, the so-called electronic tag,
being said electronic tag with an identification code stored therein physically associated or associable with respectively each of at least one or at least some accessories and/or tools included among the accessories and/or among the tools loaded on said trolley, said reading unit being a communication unit with a corresponding communication unit of said electronic tag for picking up or receiving said digital identification code memorized therein.

2. Trolley according to claim 1, wherein said electronic tag comprises a communication unit of the wireless type for communicating with the communication unit of the control unit present on the trolley, and at least one memory in which at least one unique identification code is stored of said electronic tag, which code is uniquely correlated or can be correlated to the type of accessory and/or tool to which said electronic tag is physically coupled.

3. Trolley according to claim 1, wherein the optical or optically detectable and visible identification code can comprise, alternatively or in combination with each other, graphic codes, such as bar codes or QR codes, similar codes which are physically applied to an object in a visible position or which are made by means of impression techniques on the external surface of said objects and/or by overprinting, alphanumeric type codes such as combinations of letters and numbers or symbols and which are also applied to an object in a visible position or are made by means of printing techniques on the external surface of said objects and/or by overmoulding, a specific color or a specific combination of colors or said identification codes consist of an external shape or a combination of shapes of an accessory or tool and/ or parts or areas thereof.

4. Trolley according to one or more of the preceding claims, wherein the trolley control unit is provided with a memory with a database in which
the unique identification code is associated with a corresponding accessory and/or with a corresponding tool and/or optionally the unique identification code is also stored in a non-modifiable form in the memory of the electronic tag, for example in a " read only" memory
or
a certain number of different identification codes and at least one list of accessories and/or tools loaded or that can be loaded on the trolley are recorded and/or recordable,
a data record being generated every time an identification code is coupled to an accessory or to a tool of said list which data record includes said identification code and which data record is optionally memorized in the said memory in combination with the type of accessory or tool to which said identification code has been paired or is intended to be paired, while said record is archived and replaced with the new data relating to a new identification code and a new type of accessory and/or tool each time a new accessory and/or a new tool is loaded onto said trolley.

5. Trolley according to one or more of the preceding claims 1, 2 or 4, wherein the control unit is provided with at least one unit for determining the distance between the electronic tags or each electronic tag associated with an accessory and/or a tool and said control unit and therefore the trolley itself.

6. Trolley according to claim 5, wherein the control unit comprises a processing unit which is configured by means of a program containing the corresponding instructions, to memorize a reference distance value which reference distance value is settable by the user by means of a setting interface, to compare said reference distance value with the distance measured for each accessory and/or tool which have been moved away from the trolley and therefore removed, and in which
said program further comprises the instructions for the processing unit of the control unit which renders the said control unit able to activate and deactivate a clock for each identification code, depending, respectively, on the instant in which the result of the comparison of the measured distance value with the reference distance value, corresponds to a distance of the accessory and/or tool which to which the corresponding tag is associated which has a value greater than the reference distance value and on the instant in which the outcome of the comparison of the measured distance value with the reference distance value corresponds to a distance of the accessory and/or tool to which the corresponding tag is associated, which is less than the reference distance value, while the time measured is stored in the database including the unique identification code of the tag associated with the corresponding accessory and/or corresponding tool together with optionally the date of detection of said measurements, this operation being performed individually for each accessory and/or for each tool for which the measurement of the distance of the corresponding electronic tag from the control unit, i.e. the trolley detects a change in distance, in particular an increase in distance.

7. Trolley according to one or more of the preceding claims 1, 3 or 4 and in which the activation of said clock can take place according to the instant in which the processing of the video camera image corresponds to a withdrawal and/or removal of said accessory and/or tool from said trolley, while the deactivation of the clock and the calculation of the time of absence of the said accessory or tool from the trolley take place when the processing of the video camera image corresponds to a repositioning action of the said accessory and/or of said tool on the trolley, while
the measured time is stored in the database comprising the unique identification code of the tag associated with the corresponding accessory and/or with the corresponding tool, optionally together with the date of detection of said measurements, this operation being performed individually for each accessory and/or for each tool.

8. Trolley according to claim 6 or 7, wherein the control unit is provided with a memory or a memory area in which a database of minimum processing times for different types of interventions is stored, the records of which include at least the type of intervention, the accessories and/or tools foreseen for this type of intervention, while the program includes instructions for configuring and enabling the control unit or a processing unit thereof to perform a comparison between the durations of the removal times of the different types of accessories and/or tools, the memorization of the said removal durations and the detection date, as well as the possible generation of reports or warnings based on the said comparison of the removal durations of the individual accessories and/or tools and the corresponding minimum duration, and
optionally said program can include instructions for comparing the type of accessories and/or tools that have been picked up, removed and then repositioned on the working trolley with the list of accessories and/or tools recorded in said database and related to the execution of a pre-established activity or a pre-established intervention, optionally memorizing any differences and/or inconsistencies between the accessories and/or tools actually taken and the accessories and/or tools envisaged for the execution of said intervention and/or optionally generating and transmitting warnings, alerts and/or reports.

9. Trolley according to one or more of the preceding claims, wherein the processing program can further comprise instructions for executing one or more of the operations contained in the following list, alternatively and/or in combination or in succession:
comparing the removal times of the individual accessories and/or individual tools taken from the trolley, removed and then placed on it with reference to a pre-established activity or a pre-established intervention and check for the presence of differences exceeding a certain tolerance;
generating an alarm that warns the user in order to verify if one or more accessories and/or one or more tools have been forgotten by the personnel who use them when the time to removal of one or more of the accessories and/or tools from the trolley exceeds a pre-established maximum threshold;
providing, in combination with the trolley control unit, a communication interface with the user, for entering data and/or settings and/or for indicating the start of an intervention activity, selected from one or more of the following data or combination thereof:
identification code of the user who takes charge of a trolley, the date and/or the start time of picking up the trolley and/or the date and time of abandonment in the trolley's rest position, information relating to the conditions of the accessories and/or of the tools present on the trolley at the beginning of the activities and/or at the end of the same ones;
providing in combination with the control unit at least for some of the accessories and/or tools subject to consumption and/or wear, the detection of the condition of consumption of said accessories and/or tools by means of sensors positioned in the housings of the trolley which are specifically and exclusively dedicated to said accessories and/or to said tools subject to consumption and/or wear;
providing, in combination with the control unit, one or more cameras for detecting the accessory(s) and/or the tool(s) which are taken from the trolley and/or which are placed on the trolley in combination with a computer vision program for recognition of said accessories and/or tools, which program is loaded into said control unit and is executed by it;
providing in combination a parking station for each trolley, which parking station is provided with a terminal for automatic electrical coupling to a corresponding terminal provided on the trolley of an electric source for recharging an accumulator of the trolley, the two terminals being shaped in corresponding manner and such that when the trolley is positioned in the parking station the two terminals engage automatically with each other generating the electrical connection between the power source and the battery on board the trolley;
providing a wired communication connection of the trolley control unit with a communication network to the remote unit which connection is formed by a terminal on the trolley and one present in the station and which terminals couple automatically to each other, generating the electrical connection between them, with the positioning of the trolley in the parking station;
recording of a log file relating to the various users, the dates and times of use of the trolley by various users and in combination also the relative comments and/or notes entered by them.

10. Trolley according to one or more of the preceding claims wherein the trolley control unit can be provided with a wired and/or wireless communication unit
with a central management unit which is equipped with a general software for acquiring, storing and/or analyzing the data acquired by the trolley control unit;
and/or with portable devices of each user, on which an app relating to the possibility of loading pre-established information on said portable unit and/or performing display and/or analysis operations on said information can be loaded.

11. Trolley according to one or more of the preceding claims, wherein each trolley and/or each control unit of each trolley is provided with a position sensor, such as a GPS sensor or the like, whereby the program executed by the control unit or by the processing unit of the said trolley, can generate a trace of the path followed by the trolley during the execution of the activities which path can be located in a map that represents the environment in which the trolley has moved, while in combination with said path it is also possible to identify the stops performed along the said path and to measure the stop times of the trolley and in which
optionally when the activities to be carried out are known in advance and follow precise patterns, the program can include instructions for the processing unit to compare the time duration of the stops and the duration of the removal time from the trolley of one or more accessories and/or tools and check the compatibility of said time durations, generating, in the event of non-correspondence within pre-established tolerances, alerts and/or reports and storing them in a log file and/or optionally also
the program executed by the control unit or by the processor of the same comprises the instructions for carrying out a comparison between the accessories and/or tools removed from the trolley and one or more activities foreseen in correspondence with a pre-established stop, a database of correlation between stops and the activities to be performed at them being provided.

12. Trolley according to one or more of the preceding claims, wherein the identification code is associated with a container of a consumable product and in combination with said trolley there is provided a station for filling said container with the corresponding consumable product, which station comprises
a dispensing unit, a container identification code reading unit and a control unit thanks to which the container code is acquired,
while the said filling station has a unit for measuring the quantity dispensed to the container and the control unit executes a control program which includes instructions for generating a record in which the code of the container is recorded and the corresponding filling quantity dispensed at the same one and optionally the type of product dispensed, and/or the date and time of dispensing and optionally also an identification code of the user who performed the filling, said record being recorded in a database stored in a memory of said control unit.

13. Management method of trolleys for the transport of accessories and/or tools for carrying out interventions or activities which method includes the steps of:
associating a unique identification code to at least one accessory and/or at least one tool loaded on said trolley, preferably to more than one accessory and/or more than one tool or to all the accessories or to all tools loaded on said trolley, each accessory and each tool having its own unique identification code;
providing on the trolley a unit for detecting the act of withdrawing and/or removing said at least one accessory and/or said at least one tool from said trolley and detecting the act of repositioning on said trolley of said at least one accessory and/or of said at least one tool;
determining the time duration of the removal period, i.e. the absence of said at least one accessory and/or of said at least one tool as the time difference between the instant of detection of the withdrawal and/or removal of the same from the trolley and the instant time of detecting the repositioning of the same one on the trolley;
comparing the said duration of said removal of said accessory and/or of said tool beyond the reference distance with pre-established times for said removal duration and
generating warnings and/or signals and/or reports when the duration of the removal period of an accessory and/or a tool is not compatible with a corresponding pre-established time;
performing said procedure for each accessory and/or each tool for which an act of withdrawal and/or removal from said trolley and a subsequent act of repositioning of said accessory and/or of said tool on said trolley has been detected.

14. Management method of trolleys for the transport of accessories and/or tools for carrying out interventions or activities which method includes the steps of:
measuring the distance from which said accessory and/or said tool moves away from said trolley and comparing it with a previously set maximum reference distance value;
activating a clock for measuring the time of removal from the trolley, or from the control unit of a corresponding accessory and/or of a corresponding tool when the measured distance of said accessory and/or of said tool from said trolley, or from said control unit exceeds said maximum reference distance;
deactivating said clock for measuring the time of removal from the trolley, or from the control unit of a corresponding accessory and/or of a corresponding tool when the measured distance of said accessory and/or of said tool from said trolley, or from said control unit is less than said maximum reference distance;
comparing the duration of said removal of said accessory and/or said tool beyond the maximum reference distance with pre-established times for said removal duration and
generating warnings and/or signals and/or reports when the duration of the removal period of an accessory and/or a tool is not compatible with the corresponding pre-established time;
carrying out said procedure for each accessory and/or each tool for which a distance away from the trolley, or from the control unit, greater than said maximum reference distance has been measured.

15. Method according to claim 13 or 14 which alternatively or in combination comprises the steps for performing one or more of the functions described in claims 1 to 12 and the instructions for the executions of which are encoded in one or more embodiments of the software according to one or more of claims 1 to 12.
